# EUROPÄISCHE PATENTSCHRIFT

(11) **EP 1 025 978 B1**
(45) Veröffentlichungstag und Bekanntmachung des Hinweises auf die Patenterteilung: **02.07.2003**
(21) Anmeldenummer: 00101768.0
(22) Anmeldetag: 28.01.2000
(51) Int. Cl.: B29C 51/44, B29C 51/18

(54) **Vorrichtung zum Thermoformen von Behältern aus einer Folienbahn aus thermoplastischem Kunststoff**
Apparatus for thermoforming containers made of thermoplastic film material
Dispositif de thermoformage de récipients à partir d'un film thermoplastique

(30) Priorität: 04.02.1999 DE 19904498
(43) Veröffentlichungstag der Anmeldung: 09.08.2000
(73) Patentinhaber: Illig, Adolf Maschinenbau GmbH & Co., 74081 Heilbronn (DE)
(72) Erfinder: Wagner, Hans Dieter, Dr., 74626 Bretzfeld-Waldbach (DE)

(56) Entgegenhaltungen:
- DE-A- 3 601 937
- DE-A- 19 738 954
- US-A- 5 262 181

## Beschreibung

Die Erfindung betrifft eine Vorrichtung zum Thermoformen von Behältern aus einer Folienbahn aus thermoplastischem Kunststoff nach der Gattung des Hauptanspruches.

Aus verschiedenen Vorveröffentlichungen (DE-PS 1 276 900, DE 33 46 628 C 2, DE 197 16 655 A 1) ist es bekannt, den Untertisch, der die Werkzeughälfte mit den formgebenden Teilen für die herzustellenden Behälter trägt, nach dem Formen und Ausstanzen der Behälter um einen Winkel von ca. 30 bis 90° zu schwenken. In dieser geschwenkten Lage werden die Behälter aus der Form ausgestoßen. Der Untertisch ist ferner axial verschiebbar, so dass die am Obertisch befestigte Werkzeughälfte mit der Schnittplatte und ggf. mit Streckhelfern ortsfest angeordnet werden kann.

Diese Axialverschiebung ist erforderlich, da der Schneidvorgang und die Zentrierung der beiden Werkzeughälften zueinander bei einer axialen Bewegung der beiden Werkzeughälften erfolgen muss. Der Antrieb für den Untertisch muss eine hohe Stanzkraft ausüben. Die Antriebseinheit für diese kombinierte Axial/Schwenkbewegung bei hoher Stanzkraft ist recht komplex und aufwendig und benötigt viel Platz unterhalb und seitlich des Untertisches, was eine entsprechend hohe Folienebene der Vorrichtung zur Folge hat. Dies ist auch dadurch bedingt, dass am Untertisch die Auswerfereinheit für die Behälter angeordnet sein muss sowie eine Einrichtung zur Zuführung von Kühlmittel zur Formkühlung. Die Antriebseinheit wird deshalb sehr kompakt und unzugänglich für Wartungs- und Reparaturarbeiten.

Die Anordnung der Werkzeughälfte mit den Behälterformen am Untertisch hat den Nachteil, dass die geformten und gestanzten Behälter mit der Öffnung nach oben sich unterhalb der Folienbahn bewegen. Die Gefahr des Hineinfallens von Staub und Schmutz besteht zu jeder Zeit, was aus hygienischen Gründen - die Behälter dienen oft der Lebensmittelverpackung - unerwünscht ist. So entsteht z. B. durch das heute übliche Einstechen der Folienbahn durch die Transportketten und die Reibung des Folienrandes an den Niederhalteleisten Abrieb. Da während des Schwenkens des Untertisches bereits der nächste Nutzen der Folienbahn transportiert wird, laufen direkt oberhalb der Behälter diese Bewegungen ab, die eine Verschmutzung bewirken können.

Die meisten Behälterformen bedingen den Einsatz eines Streckhelfers, der bei der beschriebenen Bauweise oberhalb der Folienbahn liegt. Auch von diesem können Teile abbrechen und in die Behälter fallen, da er aus Filz, Kunststoff oder geschäumtem Material besteht. Von der Schmierung der bewegten Teile dieser Streckhelfer und von deren Antrieb kann Öl oder Fett herabtropfen und in die Behälter gelangen, was gesundheitlich sehr bedenklich ist. Eine Abschirmung der Formstation, z. B. über eine Haube mit Zufuhr steriler und unter leichtem Überdruck stehender Druckluft ist nicht möglich, da diese oben immer offen sein müsste.

Aus der DE-OS 197 38 954 A1 ist es bekannt, oberhalb der Folienbahn zwei um jeweils 180° schwenkbare Formwerkzeughälften anzuordnen, mit denen Behälter geformt, ausgestanzt und nach oben in Stapelkäfige übergeben werden. Bei dieser Vorrichtung sind zwei teuere Werkzeughälften mit den formgebenden Teilen erforderlich. Die Behälter kommen mit der Öffnung nach oben in den Stapelmagazinen zu stehen, sodass wiederum die Gefahr der Verschmutzung besteht. Das Schwenken um 180° dauert relativ lang und beeinflusst die Taktzahl der Vorrichtung nachteilig. Die hohen zu bewegenden Massen erfordern leistungsstarke teuere Antriebe und viel Energie.

Der nächst gelegene Stand der Technik ergibt sich dabei aus dem Dokument DE-A-3 601 937, das die Merkmale des Oberbegriffs von Anspruch 1 enthält.

Der Erfindung liegt die Aufgabe zugrunde, die Vorrichtung so zu gestalten, daß unter Beibehaltung der Vorteile einer einfachen, geordneten Entnahme der Behälter aus der kombinierten Form/Stanzstation und des einfachen Überführens in Stapelmagazine bzw. in Paletten die genannten Nachteile vermieden werden. Mit der Vorrichtung sollten hygienisch weniger verschmutzte bzw. weniger verkeimte Behälter hergestellt und gestapelt bzw. in Nachfolgeeinrichtungen übergeben werden können. Der Anfahrausschuss sollte separat abgeführt werden können. Auch sollte es gemäß einer Weiterbildung möglich sein, den Stanzhub auf einfache Weise pro Takt zu/abschalten zu können, um z. B. beim Anfahren der Vorrichtung diese noch im Foliengitter hängend einer nachfolgenden Mühle zuzuführen. Ein einfaches Einführen des Restgitters in eine Mühle sollte gegeben sein, ohne dieses nach oben über Stapelmagazine hinwegführen zu müssen. Doppelte Werkzeughälften sollten nicht erforderlich sein. Die Vorrichtung sollte eine hohe Taktzahl erreichen können ohne leistungsstarke Antriebe.

Zur Lösung der Aufgabe werden die kennzeichnenden Merkmale des Hauptanspruches vorgeschlagen. Weiterbildungen der Erfindung sind Merkmale der Unteransprüche.

Ein Ausführungsbeispiel der Vorrichtung ist anhand der schematischen Zeichnungen näher beschrieben. Es zeigen:

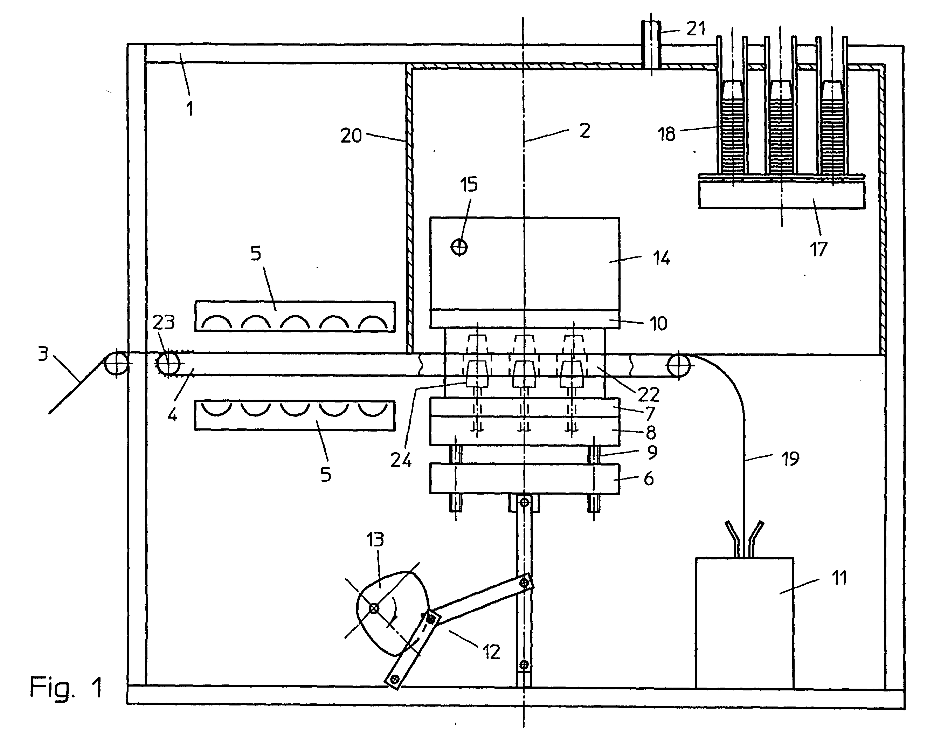

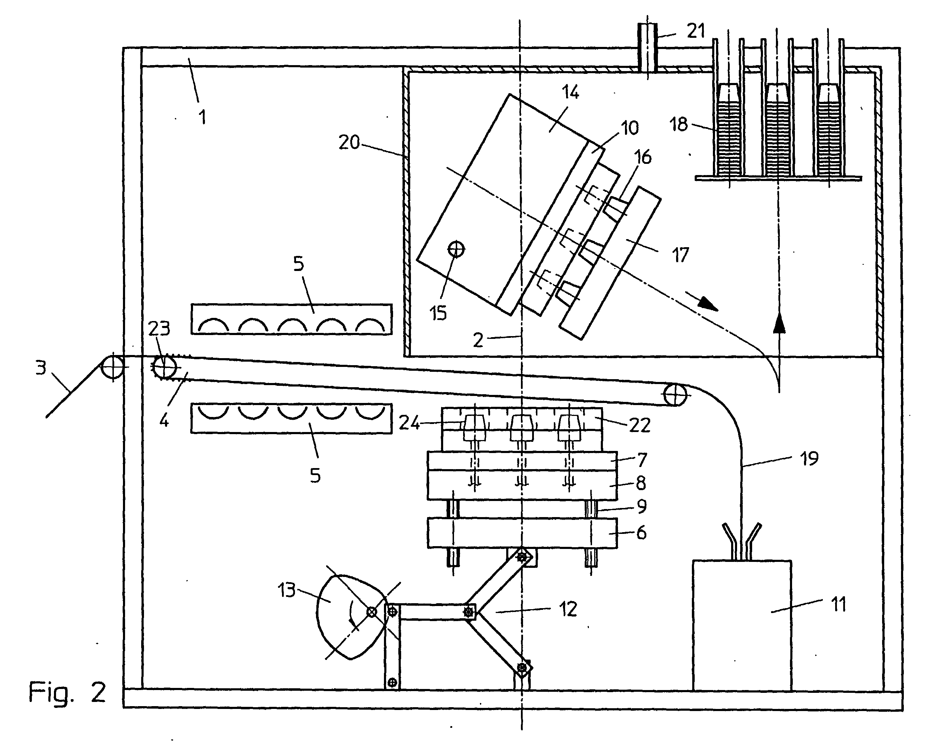

- Figur 1 und 2: eine Seitenansicht der Vorrichtung in zwei Stellungen

In einem Gestell 1 ist eine kombinierte Form/Stanzstation 2 angeordnet, der eine Folienbahn 3 taktweise von einer Transporteinrichtung 4 zugeführt wird. Falls die Folienbahn 3 von einer Folienrolle abgezogen wird, ist eine Heizeinrichtung 5 zum Erwärmen der Folienbahn 3 vorgesehen. Ist die Vorrichtung einem Extruder nachgeschaltet, kann auf diese Heizeinrichtung 5 ggf. verzichtet werden.

Die Form/Stanzstation 2 besteht aus einem Untertisch 6, der die untere Werkzeughälfte 7 mit einer Schnittplatte 22 direkt oder über eine Zwischenplatte 8 trägt. Eine Zwischenplatte 8 ist erforderlich, wenn man den Abstand zwischen Platte 8 und Untertisch 6 über Gewindespindeln 9 veränderlich gestalten will, um eine Anpassung der Lage der oberen Werkzeughälfte 10 zu der unteren Werkzeughälfte 6 in geschlossener Stellung vornehmen zu können. Dies ist zum einen erforderlich, um ein optimales Verhältnis des Durchschneidmaßes der Folie beim Schließen zum Stanzmaß einstellen zu können. Man kann durch diese Gestaltung bei entsprechender Einstellung beim Anfahren das Ausstanzen verhindern und die Ausschussbehälter in der Folienbahn 3 hängend einer Mühle 11 zuführen. Eine nicht dargestellte Verstelleinrichtung für die Gewindespindel 9 ist in diesem Falle vorgesehen. Die Hubbewegung des Untertisches 6 erfolgt über einen Kniehebelantrieb 12 und eine Kurvenscheibe 13 zur Erzielung einer hohen Stanzkraft. Die Bewegung des Untertisches 6 ist rein axial. In der unteren Werkzeughälfte 7 sitzen ggf. Streckhelfer 24.

Oberhalb der Folienbahn 3 befindet sich die obere Werkzeughälfte 10, befestigt am Obertisch 14. Sie trägt die formgebenden Teile des Werkzeuges. Dies sind im wesentlichen die eigentlichen Formen, zu jeder Form je einen Schnittstempel und ein zu verschiebbarem Formboden zum Auswerfen des ausgestanzten Behälters 16. Der Obertisch 14 ist schwenkbar um den Drehpunkt 15 ausgebildet und kann bei geöffneter Stellung des Formwerkzeuges um einen Winkel von 15°-90°, vorzugsweise von 30° bis 75°, geschwenkt werden (Figur 2). Hierzu kann eine der bekannten motorischen, pneumatischen oder hydraulischen Antriebe eingesetzt werden, die direkt oder über Kurbel, Hebel und Kurvenscheibe dieses Schwenken bewirken. Auch kann dieses Schwenken über ein Kurbelgetriebe vorgenommen werden, die eine entsprechende Winkellage des geschwenkten Obertisches 14 erzeugt. In dieser Stellung wird das Auswerfen der Behälter 14 vorgenommen, die von einer Platte 17 aufgenommen und in Stapelmagazine 18 überführt werden. Dazu ist die Platte 18 mit einer Halteeinrichtung, z. B. einer Saugeinrichtung und einer nicht dargestellten Antriebseinrichtung versehen, die den entsprechenden Bewegungsablauf - wie in Pfeilrichtung dargestellt - vornehmen kann. Anstelle der Stapelmagazine 18 können auch andere Aufnahmen, z. B. umlaufende Paletten, vorgesehen sein, die die Behälter 16 nutzenweise aufnehmen und einer nachfolgenden Bearbeitungsstation zuzuführen.

Das Folienrestgitter 19 kann bei dieser Bauweise der Vorrichtung leicht nach unten, gut zugänglich, und handhabbar - in eine Mühle 11 eingeführt und zermahlen werden.

Je nach geometrischer Gestaltung des Schneckenantriebes kann es vorteilhaft sein, vor dem Schwenken des Obertisches 14 diesen im Bereich der Form/Stanzstation 2 abzusenken z. B. durch Schwenken um den Drehpunkt 23 mittels eines nicht dargestellten Antriebes. Dadurch wird eine Kollission Transporteinrichtung/obere Werkzeughälfte 10 verhindert und/oder die Gefahr einer Verschmutzung der Behälter 16 durch die Bewegung des Folientransportes reduziert.

Die Bauweise der Vorrichtung - Behälter oberhalb der Folienbahn mit Öffnung nach unten - erlaubt die Anbringung einer Abdeckung 20, die bis auf die der Folienbahn 3 zugewandte Seite geschlossen ist und bis zu dieser herabgezogen sein kann. Eine Zufuhr von Sterilluft unter geringem Überdruck über den Anschluss 21 in den Innenraum der Abdeckung 20 bringt eine optimale Verhinderung von Verkeimung bzw. Verschmutzung der Behälter bis zu Ihrer Stapelung.

## Patentansprüche

1. Vorrichtung zum Thermoformen von Behältern aus einer Folienbahn aus thermoplastischem Kunststoff mit einer intermittierenden Transporteinrichtung (4) zum Transportieren einer im Bereich der Form/Stanzstation (2) horizontal geführten erwärmten Folienbahn (3), mit einem oberhalb der Folienbahn (3) angeordneten Obertisch (14) zur Aufnahme von formgebenden Teilen eines Formwerkzeuges für die herzustellenden Behälter (16) und einem unterhalb der Folienbahn (3) angeordneten Untertisch (6) zur Aufnahme der unteren Werkzeughälfte (7) mit einer Schnittplatte (22) und ggf. Streckhelfem (24), **dadurch gekennzeichnet, dass** der Obertisch (6) eine einzige Werkzeughälfte (10) mit Formöffnung nach unten trägt und schwenkbar um einen Winkel zwischen 15° und 90° ausgebildet und der Untertisch (6) in Richtung der Schließbewegung der Werkzeughälften (7, 10) mittels eines Antriebes verschiebbar gestaltet ist.

2. Vorrichtung nach Anspruch 1, **dadurch gekennzeichnet, dass** rings um den Obertisch (14) eine Abdeckung (20) angeordnet ist, die bis auf die der Folienbahn (3) zugewandte Seite geschlossen ist.

3. Vorrichtung nach Anspruch 2, **dadurch gekennzeichnet, dass** die Abdeckung (20) einen Anschluss (21) zur Zufuhr von steriler Luft unter einem geringen Überdruck aufweist.

4. Vorrichtung nach einem der Ansprüche 1 bis 3, **dadurch gekennzeichnet, dass** die Transporteinrichtung (4) im Bereich des Form/Stanzwerkzeuges (2) höhenverschiebbar ausgebildet ist.

5. Vorrichtung nach einem der Ansprüche 1 bis 4, **dadurch gekennzeichnet, dass** der Antrieb des Untertisches (6) in Form eines Kniehebels (12) ausgebildet ist.

6. Vorrichtung nach einem der Ansprüche 1 bis 5, **dadurch gekennzeichnet, daß** weiter Stapelmagazine (18) angeordnet sind und dass vor die in Ausgabestellung geschwenkte obere Werkzeughälfte (14) eine Platte (17) zum Aufnehmen der ausgeworfenen Behälter (16) und zu deren Übergeben an Stapelmagazine (18) bzw. zu deren Einsetzen in Aufnahmepaletten führbar ist.

7. Vorrichtung nach Anspruch 6, **dadurch gekennzeichnet, dass** die Stapelmagazine (18) vertikal angeordnet sind.

## Claims

1. Device for thermo-moulding containers from a film web of thermoplastic synthetic material with intermittent transport equipment (4) for transporting a heated film web (3) horizontally guided in the region of the moulding/punching station (2), with an upper table (14), which is arranged above the film web (3), for reception of shape-imparting parts of a mould tool for the containers (16) to be produced and a lower table (6), which is arranged below the film web (3), for reception of the lower tool half (7) with a cutting plate (22) and, optionally, stretching aids (24), **characterised in that** the upper table (6) carries a single tool half (10) with mould opening downwards and is constructed to be pivotable about an angle between 15° and 90° and the lower table (6) is formed to be displaceable by means of a drive in the direction of the closing movement of the tool halves (7, 10).

2. Device according to claim 1, **characterised in that** a cover (20), which is closed as far as the side facing the film web (3), is arranged annularly around the upper table (14).

3. Device according to claim 2, **characterised in that** the cover (20) has a connection (21) for the feed of sterile air under a low excess pressure.

4. Device according to one of claims 1 to 3, **characterised in that** the transport equipment (4) is constructed to be displaceable in height in the region of the moulding/punching tool (2).

5. Device according to one of claims 1 to 4, **characterised in that** the drive of the lower table (6) is constructed in the form of a toggle joint lever (12).

6. Device according to one of claims 1 to 5, **characterised in that** in addition a stack magazine (18) is arranged and that a plate (17) for reception of ejected containers (16) and for transfer thereof to stack magazines (18) or for insertion thereof into receiving pallets can be guided in front of the upper tool half (14) pivoted into delivery setting.

7. Device according to claim 6, **characterised in that** the stack magazine (18) is vertically arranged.

## Revendications

1. Dispositif de thermoformage de récipients à partir d'une nappe de film d'une matière thermoplastique, comportant une installation de transport intermittente (4) pour transporter une nappe de film (3) chauffée, guidés horizontalement dans la zone de la station de moulage/estampage (2), une table supérieure (14) prévue au-dessus de la nappe de film (3) pour recevoir les pièces de formage d'un outil de formage des récipients (16) à fabriquer ainsi que d'une table inférieure (6) prévue sous la nappe de film (3) pour recevoir les moitiés inférieures d'outils (7) avec une plaque de coupe (22) et le cas échéant des organes d'allongement (24),
**caractérisé en ce que**
la table supérieure (6) porte une unique moitié d'outil (10) avec l'ouverture de moulage tournée vers le bas, et cette table est montée pivotante d'un angle compris entre 15° et 90°, et la table inférieure (6) peut être coulissée par un moyen d'entraînement dans le sens du mouvement de fermeture des moitiés d'outils (7, 10).

2. Dispositif selon la revendication 1,
**caractérisé en ce qu'**
un capot (20) entourant la table supérieure (14), ferme jusque sur le côté tourné vers la nappe de film (3).

3. Dispositif selon la revendication 2,
**caractérisé en ce que**
le capot (20) comporte un branchement (21) pour fournir de l'air stérilisé sous une faible surpression.

4. Dispositif selon l'une des revendications 1 à 3,
**caractérisé en ce que**
l'installation de transport (4) est coulissante en hauteur dans la zone de l'outil de formage/découpe (2).

5. Dispositif selon l'une des revendications 1 à 4,
**caractérisé en ce que**
l'entraînement de la table inférieure (6) est réalisé sous la forme d'un levier à genouillère (12).

6. Dispositif selon l'une des revendications 1 à 5,
**caractérisé en ce qu'**
il est prévu en outre un magasin d'empilage (18) et avant que la moitié supérieure d'outil (14) soit pivotée en position de sortie, une plaque (17) est guidée pour recevoir les récipients (16) éjectés et pour les transférer au magasin d'empilage (18) ou pour les mettre dans des palettes de réception.

7. Dispositif selon la revendication 6,
**caractérisé en ce que**
le magasin d'empilage (18) est vertical.
